# EUROPEAN PATENT SPECIFICATION

(11) **EP 3 631 663 B1**
(45) Date of publication and mention of the grant of the patent: **23.06.2021**
(21) Application number: 17761080.5
(22) Date of filing: 01.09.2017
(51) Int. Cl.: G06F 21/32, G06K 9/00, H04L 9/32, G06K 19/07, G06K 19/073, G06F 21/34, H04L 29/06

(54) **SMARTCARD AND METHOD FOR CONTROLLING A SMARTCARD**
CHIPKARTE UND VERFAHREN ZUR STEUERUNG EINER CHIPKARTE
CARTE À PUCE ET PROCÉDÉ DE COMMANDE D'UNE CARTE À PUCE

(30) Priority: 30.05.2017 US 201762512238 P; 19.06.2017 GB 201709738
(43) Date of publication of application: 08.04.2020
(73) Proprietor: Zwipe AS, 0151 Oslo (NO)
(72) Inventor: DREIFUS, Henry Nardus, Sanford, Florida 32771 (US)
(74) Representative: Dehns
(86) International application number: PCT/EP2017/071972
(87) International publication number: WO 2018/219481

(56) References cited:
- WO-A1-2014/146684
- US-A1- 2015 312 041
- US-B1- 8 868 923

## Description

The present invention relates to a smartcard having one or more secure feature(s), to a method and a computer programme product for controlling such a smartcard, and to a method of manufacturing such a smart card.

Smartcards are becoming increasingly more widely used and include, for example access cards, credit cards, debit cards, pre-pay cards, loyalty cards, identity cards, and so on. Smartcards are electronic cards with the ability to store data and to interact with the user and/or with outside devices, for example via contactless technologies such as RFID. These cards can interact with readers to communicate information in order to enable access, to authorise transactions and so on.

Biometric authorisation such as fingerprint authorisation is becoming increasingly more widely used. Smartcards with biometric authorisation can interact with the user via sensors in order to enable access to secure features of the smartcard, for example in order to authorise financial transactions.

Challenges arise for biometrically authorised smartcards in relation to the constraints from the size of the smartcard, the available power resource, and the required functionality.

The size of a smartcard may be limited by ISO standards for credit cards in the case of a smartcard operable as a payment card. Thus, all components must fit into a tightly packaged form, as well as ideally being flexible and lightweight.

The power that is available is constrained by the size of the smartcard and the power source that is selected. A wired connection to an external power source could be included, such as power drawn via a connection with the contacts of a 'chip and pin' type card. However there may be technical constraints from the external power source in relation to the current drawn via this approach as well as difficulties in handling a large power at the smartcard itself. A wireless connection may be used with power being harvested using an antenna at the smartcard and a contactless coupling with an external antenna, such as an antenna of a smartcard reader. Possible implementations of this are described in WO 2016/055663 and in WO 2017/025481. It will be understood that there are limitations on the amount of power that can be obtained in this way.

The amount of power that is available can also have an impact on the potential clock speed of a processor of the smartcard, as can size constraints on the processor. This creates a link to some of the constraints arising from the required functionality of the smartcard. For example, there may be a requirement that a smartcard can perform a biometric check not only with a certain limit on power usage, but also with a required maximum time used to complete the biometric authentication process. If there is not sufficient clock speed and/or if the authentication process requires calculations that are too complex then it may not be possible to provide a smartcard with the required performance. Additional constraints on functionality of the smartcard may include a required level of security. In the prior art this can involve using encryption of data that is transferred between processors on the smartcard and/or transferred to and from the smartcard. Encryption can give rise to a further demand on the processing capabilities of the card.

Viewed from a first aspect the present invention provides a smartcard comprising: a processor for controlling operation of the smartcard; and a biometric sensor for identification of an authorised user; wherein the processor is arranged to permit access to one or more secure feature(s) of the smartcard based on a multifactor authentication process requiring both: (i) confirmation of the identity of the smartcard based on a physically unclonable characteristic of the smartcard, and (ii) authentication of the user's identity via the biometric sensor; wherein the multifactor authentication process includes weighting applied to the physically unclonable characteristic(s) and the biometric authentication.

This smartcard provides an additional layer of security in an efficient matter by using a physically unclonable characteristic of the smartcard to confirm the identity of the smartcard, along with a biometric confirmation of the identity of the user. Such a system can allow for a higher level of security compared to prior art devices using biometrics alone. Alternatively it can give a similar level of security whilst reducing the complexity of the biometric authentication process. The latter arises since there can be a perceived increase in security due to the ability to confirm the identity of the smartcard, and this might allow for the acceptance threshold for the biometric authorisation to be reduced accordingly.

The secure feature(s) of the card may for example include authorisation of a transaction for a bank card, access to data stored on the card, entry to a secure area via an access card and so on. A multilayer authentication process as described herein will more securely protect the secure feature(s) since multiple fraudulent acts will be needed in order to hack both a biometric authentication and an authentication based on the physical characteristics of the smartcard. Both of the smartcard itself and the user of the smartcard have their identity checked. Some manner of cloning attack might subvert the biometric authorisation but the physical smartcard would not be the same and thus it could not meet the check on the physically unclonable characteristic of the smartcard. The processor may also be able to reject fraudulent attempts at authentication when the smartcard has been tampered with in a way that changes the physically unclonable characteristic. On the other hand, if a smartcard is stolen so that a fraudulent user has possession of the smartcard and can hence meet the check on the physically unclonable characteristic, the processor would not permit access to secure features since the fraudulent user could not provide the required biometric match. The smartcard may be arranged to concurrently validate both the biometric identity of the user and the physical identity of the smartcard. Advantageously this can be done with a high degree of certainty in a small, very low power environment.

The physically unclonable characteristic may be recorded by the smartcard during an enrolment process, for example this may be done consecutively or concurrently with enrolment of the biometric data of an authorised user. Data representing the physically unclonable characteristic may be stored at a memory of the smartcard. The same memory may be used to store biometric data as discussed below. The processor can then later compare the stored data for the physically unclonable characteristic with newly obtained data purporting to represent the same physically unclonable characteristic in order to check that the smartcard is the same smartcard that provided the originally recorded data for the physically unclonable characteristic.

The physically unclonable characteristic of the smartcard may be a characteristic that can be measured by the processor based on a physical entity of the smartcard. This may involve measuring an electrical signal based on a physical parameter, such as measuring the output of a sensor or measuring an electrical function of the smartcard. The physically unclonable characteristic of the smartcard may be described as a physically unclonable function. It may be a characteristic that is embodied in a physical structure and is easy to evaluate but hard to predict as well as being impossible to duplicate. Since such a physically unclonable characteristic is an inherent property of the smartcard then it is highly efficient way to provide a multifactor authentication. A pre-existing smartcard design may only need a modification to its software in order to take advantage of this multifactor authentication, since the existing hardware can be used for the physically unclonable characteristic.

The physically unclonable characteristic may take the form of a physical reaction of the smartcard to an external stimulus or internal stimulus. It may be a physical characteristic of an electrical component of the smartcard, such as a function that can be defined as a reaction of the electrical component to an input, such as a signal sent from another component.

In one example the physically unclonable characteristic may be a dynamic physical reaction of the smartcard to an external influence, such as a measurement of a vibration pattern of the smartcard via an accelerometer on the smartcard. The vibration pattern may be the result of the smartcard being subject to an external acceleration, force or impact. Even with a mass produced smartcard and a mass produced accelerometer there can be unique characteristics to the vibration pattern of the smartcard, as discussed further below. In addition, as set out in more depth below, modifications may optionally be made during manufacture so as to increase the variations in the characteristics of the vibration pattern.

In another example the physically unclonable characteristic may be a measurement of an unclonable characteristic of an electrical component, such as a physically unclonable characteristic of a semiconductor component. Semiconductor components have minute and microscopic variations that result in easily measurable unclonable characteristics that are not possible to duplicate. The processor may use a physically unclonable characteristic of any such component on the smartcard, such as a physically unclonable characteristic of itself or a physically unclonable characteristic of a separate semiconductor device, such as a semiconductor device used for switching purposes or a semiconductor device in a separate processor. For example, there may be a dedicated biometric processor that can provide a physically unclonable characteristic based on semiconductor devices in the processor. Another possibility is to use an unclonable characteristic of the biometric sensor. The manufacture of biometric sensors will result in variations in physical characteristics and these affect the readings from the sensor. A fingerprint area sensor will include variations in the reaction of individual pixels and this can be used to provide a physically unclonable characteristic. For example, a physically unclonable characteristic of the sensor might be obtained by taking a reading from the sensor without a finger being present, or by measuring the reaction of the sensor to a known stimulus such as by presenting the sensor to a homogeneous target. It will be appreciated that depending on the components used to make the smartcard then there may be various ways to obtain easily measurable physically unclonable characteristics.

A combination of the different physically unclonable characteristics may be used, such as physically unclonable characteristics relating to multiple electrical components. This can allow for a multifactor authentication incorporating specific checks on different physically unclonable characteristics of the smartcard and providing greater security than a two-factor authentication involving just one physically unclonable characteristic. For example, it may be beneficial to ensure that there is no substitution or tampering in relation to several different components, such as a memory used for biometric data, one or more processors, and so on.

The multifactor authentication process includes weighting applied to the physically unclonable characteristic(s) and the biometric authentication. There may be an accuracy threshold for the confirmation of the identity of the smartcard and/or for the authentication of the user's identity. The weighting and the accuracy threshold may be adjusted to provide a required level of security or to allow for a "best fit" approach to confirming the identity of the user. This may be done via analysis of the data with the aim of maximising the accuracy of the validation process (i.e. minimising the incidence of false acceptance or rejection) whilst minimising the computer processing required. Reduced computer processing is a particular advantage for a smartcard where both the processing capability and the electrical power available can be limited. Weighting may provide advantages since the biometric authentication and the identification of the smartcard via the physically unclonable characteristic(s) may need to be normalised, for example as with multimodal biometric authentication systems. An analysis to provide a best fit may for example make use of a goal seeking optimisation process with testing by applying Bayesian inference analysis and/or other similar techniques. The best fit analysis may include optimising the security of the multifactor authentication process through the application of weighting factors to the different measurements used in different factors of the authentication (e.g. the physically unclonable characteristic and the biometric identification) based on the degree of uniqueness of the measurements. This can allow for increased accuracy and/or a higher confidence in the security of the authentication process with fewer processing cycles and hence a lower computer processing requirement.

The multifactor authentication process may be adaptable over time in order to account for variations with time in relation to the biometric data from the sensor and/or in relation to the physically unclonable characteristic. For example, there may be wear of the biometric sensor that can change the appearance of the biometric data and/or change a physically unclonable characteristic of the sensor. The user may age resulting in changes to the biometric, such as changes to a fingerprint as the skin ages. The smartcard may be subject to outside influences in terms of both physical forces/physical contact and also electromagnetic forces. This could affect a physically unclonable characteristic such as a vibration pattern and it may also affect an electrical response of electrical components of the smartcard, either through change to the component itself, or through changes in a flexible circuit that incorporates the component and handles electrical signals passing to or from the component.

The multifactor authentication process may include fuzzy logic or machine learning type processes in order to adapt to variations in one or both of the physically unclonable characteristic and the biometric data, which may include the biometric sensor information acquisition and processing). The multifactor authentication process may include monitoring the biometric authentication and/or the identification of the physically unclonable characteristic over time, for example by recording data over a set number of the most recent authentications, such as at least 10, at least 20 or at least 50 authentications. Depending on the expected rate of variation then there may be a different number of authentications that are recorded for the biometric authentication and the physically unclonable characteristic, as well as different numbers for different physically unclonable characteristics when there are multiple such characteristics used in the multifactor authentication. The recorded data for past authentications may be used to identify variations over time and/or to update the acceptance criteria. For example, a biometric template may be updated based on the set number of the most recent biometric authentications in order that the biometric data will be adjusted appropriately as the user ages. A threshold for matching of the physically unclonable characteristic may be widened or shifted if there is a variation in time of the physically unclonable characteristic, i.e. as the smartcard 'ages' through use.

Recorded data from past authentications may also, or alternatively, be used to detect potential fraudulent use of the smartcard. In some cases this may be done by checking for data from the biometric sensor and/or the physically unclonable characteristic that is identical to data from an earlier authentication. One type of attack that is used in relation to smartcard security is to record valid data and the replay this to trick the processor into allowing access to the secure feature(s). In situations where the data is identical to an earlier authentication then this can be dealt with as an attempt to hack the smartcard since there would inevitably be small variations in the data in between different valid attempts to gain access to the secure features. Thus, the multifactor authentication process may include rejecting the authentication attempt if one or both of the data from the biometric sensor and/or the data from the physically unclonable characteristic is identical to data from an earlier authentication.

The processor of the smartcard carries out the multifactor authentication process and thus may be configured to perform the steps set out above. As noted below, this may be a single processor or there may be multiple separate processors that work together to provide the required functionality.

As noted above, one possible physically unclonable characteristic is a vibration pattern of the smartcard. Thus, the smartcard may comprise an accelerometer for sensing movements of the smartcard and the processor may use a physically unclonable characteristic of the smartcard derived from movements sensed by the accelerometer. This may require the user to physically interact with the smartcard in a certain way, such as by tapping the smartcard on a hard surface or by flicking the smartcard to vibrate it. It will be appreciated that there will be variations in the input to the smartcard from the user and that in some cases this may result in large variations in the accelerometer output. However, it is anticipated that some features of the vibration pattern will be unique even with variations in the input. Moreover, as set out above the proposed multifactor authentication allows for some variation in the threshold for acceptance as well as in weighting of the different authentication factors, and this can be used to address variations in the accelerometer output.

The output of the accelerometer when the smartcard undergoes certain types of vibration will be unique to the smartcard. Each smartcard will have its own natural frequency as well as reacting dynamically to interactions of the user with the card in a different way to other cards. Movements of the card that are detected by the accelerometer will include the effects of the dynamic reaction of the smartcard. The output signal (i.e. the accelerometer output data) from the accelerometer is a representation of the dynamic reaction of the smartcard as well as the movement that are made.

Since the accelerometer output data is specific to both the user and the card, then the data cannot be duplicated. If a "fake" card is produced then the dynamic reaction of the new card will be different from the original card, so therefore it cannot be hacked. In the case of smartcards that are mass produced then it is likely that tolerances and inevitable small variations in the construction of the smartcards will lead to differences in the characteristics of the movements of the smartcard. To enhance the distinctions between mass produced smartcards manufactured using the same basic process then the manufacturing method may include varying the location of the accelerometer and/or adding mass/stiffness elements with differing characteristics to the smartcards so that each individual card has a more distinct unique vibration pattern. Thus, the smartcard may include an added mass or stiffness element in some examples.

The accelerometer may also allow for control of the smartcard based on movements sensed by the accelerometer. For example, movements sensed by the accelerometer may be used to activate various operating modes of the card. Advantageously the smartcard is a contactless card and thus the user can switch between different modes as well as using the card via card readers with the only contact being holding of the card by the user. This can allow for increased features and increased complexity in how the smartcard is used, without detriment to the ease of operation of the card.

The processor may be arranged to identify the movements of the card based on the output of the accelerometer, and to change the operating mode of the smartcard in response to pre-set movements. The pre-set movements may include any or all or translations, rotations, acceleration, jerk/impulse and so on. In addition, the processor may determine the length of a time period without motion, i.e. a time period indicative of no active usage of the smartcard, and this may also be used to change the operating mode of the smartcard and/or to deactivate features, such as a secure feature, that are currently activated. The processor may also be arranged to identify repeated movements or sequences of movements, such as a double tap, or a translational movement followed by a rotation such as a sliding and twisting motion.

The operating modes of the smartcard that are controlled by movements sensed by the accelerometer may be related to a high level function, for example turning the card on or off, or changing the basic functionality of the card for example by switching between operating as an access card, a payment card, a transportation smartcard, switching between different accounts of the same type (e.g. two bank accounts) and so on.

The smartcard may enter a dormant/off mode and require re-activation or re-authorisation for continued use after it has been left unused for a period of time, for example for several days or several weeks depending on the application. A re-activation may require a specific sequence of movements to be detected, or activation via interaction with a reader.

Although movements can be detected by an accelerometer with a single sensing axis, it is preferred to be able to detect accelerations in all directions. This may be done via multiple accelerometers, but preferably a single accelerometer is used that can detect acceleration in all directions, such as a tri-axis accelerometer.

The accelerometer may be a micro-machined accelerometer such as a MEMS accelerometer. Alternatively a piezoelectric sensor may be used, such as a dedicated piezoelectric accelerometer or another piezoelectric sensor that can sense accelerations (e.g. a piezoelectric sounder or microphone). The use of these types of devices allows for them to be installed on a smartcard without the need for increasing the size of the smartcard. They also have low power consumption, which can be a design restriction for smartcards as set out above. Piezoelectric sensors may advantageously be incorporated into the device in such a way that there is zero power consumption until an input is detected by the piezoelectric sensor. The accelerometer may use a sense element such as a micro-machined cantilever or seismic mass. In an example implementation the acceleration sensing is based on the principle of a differential capacitance arising from acceleration-induced motion of the sense element. A possible accelerometer that could be used is a Tri-axis Digital Accelerometer such as those provided by Kionix, Inc. of Ithaca, New York, USA. An example embodiment uses the Kionix KXCJB-1041 accelerometer.

The smartcard may be capable of wireless communication, such as using RFID or NFC communication. Alternatively or additionally the smartcard may comprise a contact connection, for example via a contact pad or the like such as those used for "chip and pin" cards. In various embodiments, the smartcard may permit both wireless communication and contact communication.

The processor may also be arranged for enrolment of biometric data via the biometric sensor. This may be a fingerprint sensor, which is preferably embedded into the card. With this feature the authorised user may initially enrol their fingerprint onto the actual card, and may then be required to place their finger or thumb on the fingerprint sensor in order to authorise some or all uses of the card. A fingerprint matching algorithm on the processor may be used to identify a fingerprint match between an enrolled user and a fingerprint sensed by the fingerprint sensor.

The smartcard may be any one of: an access card, a credit card, a debit card, a pre-pay card, a loyalty card, an identity card, or the like. The smartcard preferably has a width of between 85.47 mm and 85.72 mm, and a height of between 53.92 mm and 54.03 mm. The smartcard may have a thickness less than 0.84 mm, and preferably of about 0.76 mm (e.g. ± 0.08 mm). More generally, the smartcard may comply with ISO 7816, which is the specification for a smartcard.

Where a processor is referred to herein it should be understood that this may include multiple processors working together. For example, the biometric sensor and/or the accelerometer (if present) may each be provided with a dedicated processor that interacts with a main processor that has control of other features of the smartcard. Moreover, whilst in the preferred embodiment it is said that there is a processor that controls communications with the card as well as a fingerprint processor that is a part of the fingerprint authentication engine, it should be appreciated that these two processors may be each made up of multiple processors or could be separate software modules of a single combined processor.

Viewed from a second aspect, the invention provides a method for controlling a smartcard, the smartcard comprising: a processor for controlling operation of the smartcard; and a biometric sensor for identification of an authorised user; wherein the method comprises: controlling operation of the smartcard to permit access to one or more secure feature(s) of the smartcard based on a multifactor authentication process; and wherein the multifactor authentication process requires both: (i) confirming the identity of the smartcard based on a physically unclonable characteristic of the smartcard, and (ii) authenticating the user's identity via the biometric sensor; wherein the multifactor authentication process includes weighting applied to the physically unclonable characteristic(s) and the biometric authentication.

The method provides advantages in relation to the security of the smartcard in the same way as the smartcard of the first aspect.

The method may include use of a smartcard with any of the features discussed above in relation to the first aspect. Thus, the physically unclonable characteristic may be as discussed above. The method may include recording the physically unclonable characteristic during an enrolment process. This may be done consecutively or concurrently with enrolment of the biometric data of an authorised user as discussed above.

The invention may also include a method of manufacturing a smartcard. This may consist of providing features as in the first aspect. The manufacturing method may also include providing any or all of the optional features discussed above. The method may include programming the processor to function as discussed above.

To enhance the distinctions in vibrational patterns and hence allow for greater differences in accelerometer output between cards manufactured using the same process that are exposed to identical or similar movements, then the manufacturing method may include providing an accelerometer on the smartcard and varying the location of the accelerometer and/or adding mass/stiffness elements with differing characteristics and/or at differing locations to the smartcards so that each individual smartcard has a unique vibration pattern.

The method may optionally include adding a mass and/or stiffness element to the card, for example on a flexible circuit board of the card, with the mass and/or stiffness element being selected from a set of elements with differing mass and/or stiffness characteristics. This allows for the added mass and/or stiffness element to be placed at the same location, which can allow for easier manufacture, whilst ensuring variable effects on the movement of the card since the mass and/or stiffness of the added element will vary. Alternatively or additionally a mass and/or stiffness element may be added to the card at a location that varies for each card. This could use an identical mass and/or stiffness element for each card, or the mass and/or stiffness element being selected from a set of elements with differing mass and/or stiffness characteristics.

In yet a further aspect, the present invention provides a computer programme product comprising instructions that, when executed on a processor in a smartcard as described above, will cause the processor to control operation of the smartcard to permit access to one or more secure feature(s) of the smartcard based on a multifactor authentication process; wherein the multifactor authentication process requires both: (i) confirming the identity of the smartcard based on a physically unclonable characteristic of the smartcard, and (ii) authenticating the user's identity via the biometric sensor. The instructions may be arranged to cause the processor to operate in accordance with any or all of the optional and preferred features discussed above, and the smartcard may have corresponding features taken from any of those features discussed above.

Certain preferred embodiments of the present invention will now be described in greater detail, by way of example only and with reference to the accompanying drawings, in which:
Figure 1 is a diagram of a circuit for a smartcard incorporating an accelerometer along with a biometric sensor in the form of a fingerprint area sensor;
Figure 2 illustrates a smartcard with an external housing; and
Figure 3 shows an example laminated type smartcard.

By way of example the invention is described in the context of a smartcard that uses contactless technology and, in the illustrated embodiment, uses power harvested from the reader. These features are envisaged to be advantageous features of the proposed movement sensitive smartcards, but are not seen as essential features. The smartcard may hence alternatively use a physical contact and/or include a battery providing internal power, for example.

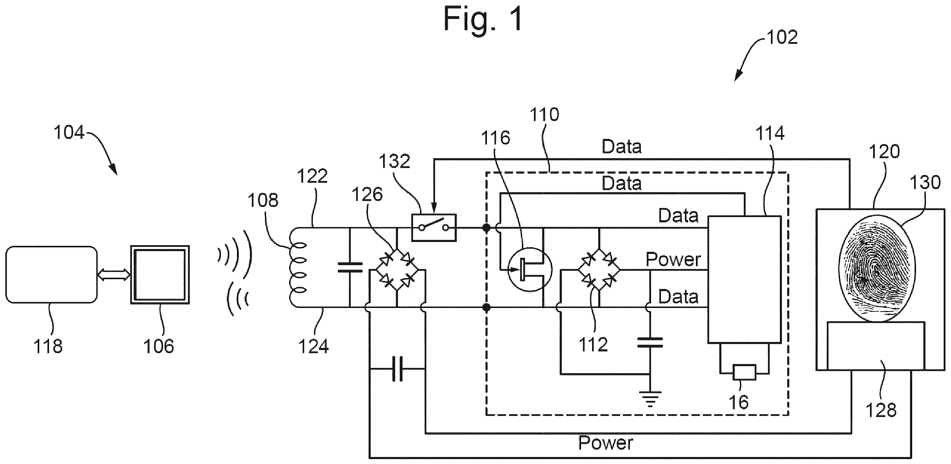

Figure 1 shows the architecture of a smartcard 102 with an optional accelerometer 16. A powered card reader 104 transmits a signal via an antenna 106. The signal is typically 13.56 MHz for MIFARE® and DESFire® systems, manufactured by NXP Semiconductors, but may be 125 kHz for lower frequency PROX® products, manufactured by HID Global Corp. This signal is received by an antenna 108 of the smartcard 102, comprising a tuned coil and capacitor, and then passed to a communication chip 110. The received signal is rectified by a bridge rectifier 112, and the DC output of the rectifier 112 is provided to processor 114 that controls the messaging from the communication chip 110.

A control signal output from the processor 114 controls a field effect transistor 116 that is connected across the antenna 108. By switching on and off the transistor 116, a signal can be transmitted by the smartcard 102 and decoded by suitable control circuits 118 in the reader 104. This type of signalling is known as backscatter modulation and is characterised by the fact that the reader 104 is used to power the return message to itself.

The accelerometer 16, where present, is connected in an appropriate way to the processor 114. The accelerometer 16 can be a Tri-axis Digital Accelerometer as provided by Kionix, Inc. of Ithaca, New York, USA and in this example it is the Kionix KXCJB-1041 accelerometer. The accelerometer 16 senses movements of the card and provides an output signal to the processor 114, which is arranged to detect and identify movements that are associated with required operating modes on the card as discussed below. The accelerometer 16 can also be used to obtain a physically unclonable characteristic of the smartcard 102 for use in a multifactor authentication process as discussed below. The accelerometer 16 may be used only when power is being harvested from the powered card reader 104, or alternatively the smartcard 102 may be additionally provided with a battery (not shown in the Figures) allowing for the accelerometer 16, and also the related functionalities of the processor 114 and other features of the device to be used at any time.

A fingerprint authentication engine 120 is connected to the processor 114 in order to allow for biometric authentication of the user based on a finger or thumb print. The fingerprint authentication engine 120 can be powered by the antenna 108 so that the card is a fully passive smartcard 102. In that case the fingerprint identification of an authorised user is only possible whilst power is being harvested from the card reader 104. In an alternative arrangement the smartcard 102 may be additionally provided with a battery (not shown in the Figures) allowing for the fingerprint authentication engine 120, and also the related functionalities of the processor 114 to be used at any time.

As used herein, the term "passive smartcard " should be understood to mean a smartcard 102 in which the communication chip 110 is powered only by energy harvested from an excitation field, for example generated by the card reader 118. That is to say, a passive smartcard 102 relies on the reader 118 to supply its power for broadcasting. A passive smartcard 102 would not normally include a battery, although a battery may be included to power auxiliary components of the circuit (but not to broadcast); such devices are often referred to as "semi-passive devices".

Similarly, the term "passive fingerprint/biometric authentication engine" should be understood to mean a fingerprint/biometric authentication engine that is powered only by energy harvested from an excitation field, for example the RF excitation field generated by the card reader 118.

It should be noted that in alternative embodiments battery powered and hence non-passive smartcards may be provided and may have the same features in relation to the accelerometer, fingerprint sensor, multifactor authentication process, and so on. With these alternatives the smartcard can have the same features aside from that the use of harvested power is replaced by the power from a battery that is contained within the card body.

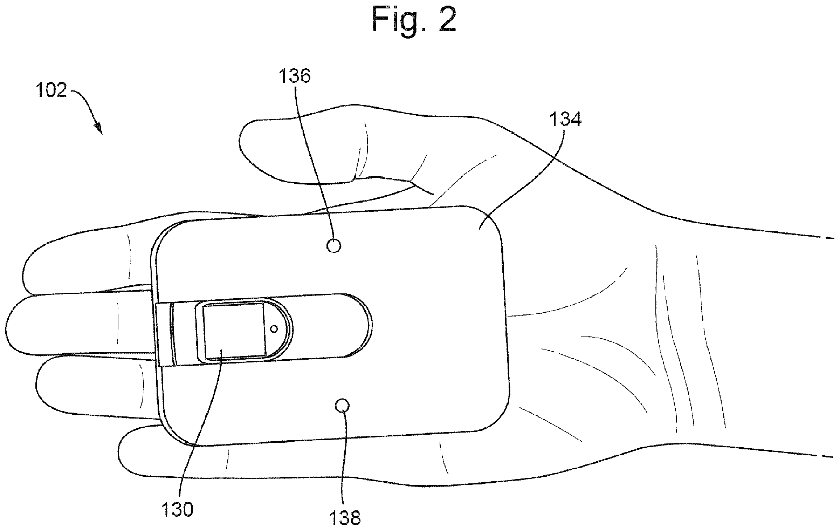

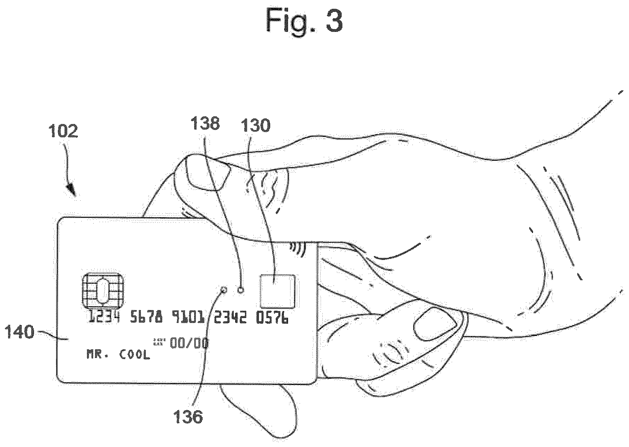

The card body can be a card housing 134 as shown in Figure 2 or a laminated card body 140 as shown in Figure 3. It will be appreciated that there are significant constraints on the size of the smartcard 102.

The antenna 108 comprises a tuned circuit including an induction coil and a capacitor, which are tuned to receive an RF signal from the card reader 104. When exposed to the excitation field generated by the reader 104, a voltage is induced across the antenna 108.

The antenna 108 has first and second end output lines 122, 124, one at each end of the antenna 108. The output lines of the antenna 108 are connected to the fingerprint authentication engine 120 to provide power to the fingerprint authentication engine 120. In this arrangement, a rectifier 126 is provided to rectify the AC voltage received by the antenna 108. The rectified DC voltage is smoothed using a smoothing capacitor and supplied to the fingerprint authentication engine 120.

The fingerprint authentication engine 120 includes a fingerprint processor 128 and a fingerprint reader 130, which can be an area fingerprint reader 130, mounted on a card housing 134 as shown in Figure 2 or fitted so as to be exposed from a laminated card body 140 as shown in Figure 3. The card housing 134 or the laminated body 140 encases all of the components of Figure 1, and is sized similarly to conventional smartcards. The fingerprint authentication engine 120 can be passive and hence powered only by the voltage output from the antenna 108, or there may be battery power as mentioned above. The fingerprint processor 128 comprises a microprocessor that is chosen to be of very low power and very high speed, so as to be able to perform biometric matching in a reasonable time.

The fingerprint authentication engine 120 is arranged to scan a finger or thumb presented to the fingerprint reader 130 and to compare the scanned fingerprint of the finger or thumb to pre-stored fingerprint data using the fingerprint processor 128. A determination is then made as to whether the scanned fingerprint matches the pre-stored fingerprint data. In a preferred embodiment, the time required for capturing a fingerprint image and authenticating the bearer of the card 102 is less than one second.

If a biometric match is determined and/or if appropriate movements are detected via the accelerometer 16, then the processor 114 takes appropriate action depending on its programming. In this example a fingerprint authorisation process is used along with a requirement for at least one further authorisation in a multifactor authorisation process. With this multifactor authentication process then full access to secure features of the smartcard requires both a biometric authorisation (embodied by the fingerprint authorisation in this example) and identification of the smartcard via a physically unclonable characteristic. If the multifactor authentication process finds a match with both the biometric and the physically unclonable characteristic then the processor 114 permits use of the smartcard 104 with the contactless card reader 104. Thus, the communication chip 110 is only authorised to transmit a signal to the card reader 104 when the multifactor authentication process is satisfied. The communication chip 110 transmits the signal by backscatter modulation.

The physically unclonable characteristic may for example be a physically unclonable function of a semiconductor device on the smartcard. Alternatively or additionally the multifactor authentication process may make use of a physically unclonable characteristic based on the biometric sensor 130, such as an output from the sensor when subject to predefined electrical or physical stimulus. The physically unclonable characteristic might be based on both of the biometric sensor 130 and also on the processor 114, or the fingerprint processor 128. Electrical components such as semiconductor devices are nominally identical but in reality have numerous small variations that can be used as the basis for one or more physically unclonable characteristic(s) in relation to the multifactor authentication process required by the proposed smartcard 102.

Where an accelerometer 16 is used the processor 114 receives the output from the accelerometer 16 and this allows the processor 114 to determine what movements of the smartcard 102 have been made. The processor 114 may identify pre-set movements that are linked with required changes to the operating mode of the smartcard 102. As discussed above, the movements may include any type of or combination of rotation, translation, acceleration, jerk, impulse and other movements detectable by the accelerometer 16.

The movements detected by the accelerometer 16 are further influenced by the construction and geometry of the smartcard 102. For example, a smartcard 102 with a housing 134 as in Figure 2 will behave differently to a smartcard 102 with a laminated body 140 as in Figure 3 in terms of their natural frequency and their dynamic reaction to a given movement. The same will apply to differently manufactured cards of the same basic type, so that laminated cards produced by different manufacturers and or by different processes will react differently.

This means that accelerometer 16 may be used in relation to a physically unclonable characteristic based on a vibration pattern of the smartcard 102. This coud be instead of or in addition to physically unclonable characteristics from electrical components such as those mentioned above. If a "fake" card is produced fraudulently and the fraudster has managed to copy data concerning the smartcard's vibration patterns, with this data being "injected" into the microprocessor of the "fake" card, the resonance of the new card is different from the original card, so therefore it cannot be hacked since it cannot correctly identify itself. Thus, movement patterns that are detected via the accelerometer 16 can be unique to both the user and to the individual smartcard 102.

The movement patterns enrolled via the accelerometer 16 may be stored in a memory at the card 102 (for example as a part of the processor 114) and/or in an external database. Since the accelerometer output signal for the movement patterns can be unique to each card then it unlike biometric data the risk to security from permitting the data to be stored off the card is less, and an additional check on the authenticity of the card itself can be performed by checking the accelerometer data in an external database with accelerometer data on the card.

The operating modes that the processor 114 activates or switches to in response to an identified movement associated with the require change in operating mode may include any mode of operation as discussed above, including turning the card on or off, activating secure aspects of the card 102 such as contactless payment and/or communications with the card reader 104, or changing the basic functionality of the card 102 for example by switching between operating as an access card, a payment card, a transportation smartcard, switching between different accounts of the same type (e.g. two bank accounts), switching between communications protocols (such as blue tooth, Wifi, NFC) and/or activating a communication protocol, activating a display such as an LCD or LED display, obtaining an output from the smartcard 102, such as a one-time-password or the like, or prompting the card 102 to automatically perform a standard operation of the smartcard 102. It will be appreciated that the smartcard 102 can readily be programmed with any required characteristics in terms of the action taken in reaction to events detected by the accelerometer 16.

The processor 114 has a learn mode to allow for the user to specify which movements (including combinations of movements) should activate particular operating modes. In the learn mode the processor 114 prompts the user to make the desired sequence of movements, and to repeat the movements for a predetermined set of times. These movements are then allocated to the required operating mode. The processor 114 can implement a dropped card mode and/or a biometric failure back up mode as discussed above.

In some circumstances, the owner of the biometric smartcard 102 may suffer an injury resulting in damage to the finger that has been enrolled on the card 102. This damage might, for example, be a scar on the part of the finger that is being evaluated. Such damage can mean that the owner will not be authorised by the card 102 since a fingerprint match is not made. In this event the processor 114 may prompt the user for a back-up identification/authorisation check via a sequence of movements. The user can hence have a "password" entered using movements of the card to be used in the event that the biometric authorisation fails.

After such a back-up authorisation the card 102 could be arranged to be used as normal, or it could be provided with a degraded mode in which fewer operating modes or fewer features of the cards 102 are enabled. For example, if the smartcard 102 can act as a bank card then the back-up authorisation might allow for transactions with a maximum spending limit lower than the usual maximum limit for the card.

## Claims

1. A smartcard (102) comprising:
a processor (114) for controlling operation of the smartcard; and
a biometric sensor (130) for identification of an authorised user;
wherein the processor (114) is arranged to permit access to one or more secure feature(s) of the smartcard (102) based on a multifactor authentication process requiring both:
(i) confirmation of the identity of the smartcard (102) based on a physically unclonable characteristic of the smartcard (102), and
(ii) authentication of the user's identity via the biometric sensor (130);
wherein the multifactor authentication process includes weighting applied to
the physically unclonable characteristic(s) and the biometric authentication.

2. A smartcard (102) as claimed in claim 1, wherein the physically unclonable characteristic is recorded by the smartcard during an enrolment process.

3. A smartcard (102) as claimed in claim 1 or 2, comprising a memory for storing data representing the physically unclonable characteristic, wherein the processor (114) is arranged to compare the stored data for the physically unclonable characteristic with newly obtained data purporting to represent the same physically unclonable characteristic in order to check that the smartcard (102) is the same smartcard that provided the originally recorded data for the physically unclonable characteristic.

4. A smartcard (102) as claimed in claim 1, 2 or 3, wherein the physically unclonable characteristic of the smartcard is a characteristic that can be measured based on a physical entity of the smartcard, and wherein the physically unclonable characteristic preferably takes the form of a physical reaction of the smartcard to an external stimulus or internal stimulus.

5. A smartcard (102) as claimed in any preceding claim, wherein the physically unclonable characteristic is a physically unclonable characteristic of an electrical component (130; 114; 128) of the smartcard, such as a function that can be defined as a reaction of the electrical component to an input signal.

6. A smartcard (102) as claimed in claim 5, wherein the physically unclonable characteristic of an electrical component includes at least one of a physically unclonable characteristic of a semiconductor device and a physically unclonable characteristic of the biometric sensor (130).

7. A smartcard (102) as claimed in any of claims 1 to 4 wherein the physically unclonable characteristic is based on a vibration pattern of the smartcard measured via an accelerometer (16) on the smartcard.

8. A smartcard (102) as claimed in any preceding claim, wherein the multifactor authentication process includes a requirement for identification of the smartcard (102) based on a combination of multiple different physically unclonable characteristics.

9. A smartcard (102) as claimed in any preceding claim, wherein the multifactor authentication process includes an accuracy threshold for the confirmation of the identity of the smartcard and/or for the authentication of the user's identity.

10. A smartcard (102) as claimed in any preceding claim, wherein the processor (114) is arranged to adapt the multifactor authentication process over time in order to account for variations with time in relation to the biometric data from the sensor (130) and/or in relation to the physically unclonable characteristic of the smartcard.

11. A smartcard (102) as claimed in any preceding claim, wherein the multifactor authentication process includes monitoring the biometric authentication and/or the identification of the physically unclonable characteristic over time by recording data over a set number of the most recent authentications, such as at least 10, at least 20 or at least 50 recent authentications.

12. A smartcard (102) as claimed in claim 11, wherein the processor (114) is arranged to use the recorded data for past authentications to identify variations over time and/or to update the acceptance criteria of the multifactor authentication process.

13. A smartcard (102) as claimed in claim 11 or 12, wherein the processor (114) is arranged to use recorded data from past authentications to detect potential fraudulent use of the smartcard by checking for data from the biometric sensor (130) and/or the physically unclonable characteristic that is identical to recorded data from an earlier authentication and rejecting the authentication attempt if one or both of the data from the biometric sensor (130) and/or the data from the physically unclonable characteristic is identical to data from an earlier authentication.

14. A method for controlling a smartcard (102), the smartcard comprising: a processor (114) for controlling operation of the smartcard; and a biometric sensor (130) for identification of an authorised user; wherein the method comprises:
controlling operation of the smartcard (102) to permit access to one or more secure feature(s) of the smartcard based on a multifactor authentication process; and
wherein the multifactor authentication process requires both:
(i) confirming the identity of the smartcard (102) based on a physically unclonable characteristic of the smartcard (102), and
(ii) authenticating the user's identity via the biometric sensor (130);
wherein the multifactor authentication process includes weighting applied to
the physically unclonable characteristic(s) and the biometric authentication.

15. A computer programme product comprising instructions that, when executed on a processor in a smartcard (102) as claimed in any of claims 1 to 13, will cause the processor (114) to perform each of the method steps of claim 14.

## Patentansprüche

1. Chipkarte (102), umfassend:
einen Prozessor (114) zum Steuern des Betriebs der Chipkarte; und
einen biometrischen Sensor (130) zur Identifizierung eines berechtigten Benutzers;
wobei der Prozessor (114) eingerichtet ist, um den Zugriff auf ein oder mehrere Sicherheitsmerkmal(e) der Chipkarte (102) basierend auf einem Multifaktor-Authentifizierungsprozess, der beides erfordert, zu erlauben:
(i) Bestätigung der Identität der Chipkarte (102) basierend auf einer physikalisch nicht klonbaren Eigenschaft der Chipkarte (102), und
(ii) Authentifizierung der Identität des Benutzers über den biometrischen Sensor (130); wobei der Multifaktor-Authentifizierungsprozess eine Gewichtung einschließt, die auf die physikalisch nicht klonbare(n) Eigenschaft(en) und die biometrische Authentifizierung aufgebracht wird.

2. Chipkarte (102) nach Anspruch 1, wobei die physikalisch nicht klonbare Eigenschaft von der Chipkarte während eines Erfassungsprozesses aufgezeichnet wird.

3. Chipkarte (102) nach Anspruch 1 oder 2, umfassend einen Speicher zum Speichern von Daten, welche die physikalisch nicht klonbare Eigenschaft repräsentieren, wobei der Prozessor (114) eingerichtet ist, die gespeicherten Daten für die physikalisch nicht klonbare Eigenschaft mit neu erhaltenen Daten zu vergleichen, die vorgeben, dass sie dieselbe physikalisch nicht klonbare Eigenschaft darstellen, um zu überprüfen, dass die Chipkarte (102) dieselbe Chipkarte ist, welche die ursprünglich aufgezeichneten Daten für die physikalisch nicht klonbare Eigenschaft bereitgestellt hat.

4. Chipkarte (102) nach Anspruch 1, 2 oder 3, wobei die physikalisch nicht klonbare Eigenschaft der Chipkarte eine Eigenschaft ist, die basierend auf einer physikalischen Entität der Chipkarte gemessen werden kann, und wobei die physikalisch nicht klonbare Eigenschaft die Form einer physikalischen Reaktion der Chipkarte auf einen externen Stimulus oder internen Stimulus annimmt.

5. Chipkarte (102) nach einem vorstehenden Anspruch, wobei die physikalisch nicht klonbare Eigenschaft eine physikalisch nicht klonbare Eigenschaft einer elektrischen Komponente (130; 114; 128) der Chipkarte ist, wie eine Funktion, die als eine Reaktion der elektrischen Komponente auf ein Eingangssignal definiert werden kann.

6. Chipkarte (102) nach Anspruch 5, wobei die physikalisch nicht klonbare Eigenschaft einer elektrischen Komponente mindestens eine von einer physikalisch nicht klonbaren Eigenschaft einer Halbleitervorrichtung und einer physikalisch nicht klonbaren Eigenschaft des biometrischen Sensors (130) einschließt.

7. Chipkarte (102) nach einem der Ansprüche 1 bis 4, wobei die physikalisch nicht klonbare Eigenschaft auf einem Schwingungsmuster der Chipkarte basiert, das über einen Beschleunigungsmesser (16) auf der Chipkarte gemessen wird.

8. Chipkarte (102) nach einem vorstehenden Anspruch, wobei der Multifaktor-Authentifizierungsprozess eine Anforderung zur Identifizierung der Chipkarte (102) basierend auf einer Kombination von mehreren unterschiedlichen physikalisch nicht klonbaren Eigenschaften einschließt.

9. Chipkarte (102) nach einem vorstehenden Anspruch, wobei der Multifaktor-Authentifizierungsprozess eine Genauigkeitsschwelle für die Bestätigung der Identität der Chipkarte und/oder für die Authentifizierung der Identität des Benutzers einschließt.

10. Chipkarte (102) nach einem vorstehenden Anspruch, wobei der Prozessor (114) eingerichtet ist, um den Multifaktor-Authentifizierungsprozess im Laufe der Zeit anzupassen, um zeitliche Schwankungen in Bezug auf die biometrischen Daten vom Sensor (130) und/oder in Bezug auf die physikalisch nicht klonbare Eigenschaft der Chipkarte zu berücksichtigen.

11. Chipkarte (102) nach einem vorstehenden Anspruch, wobei der Multifaktor-Authentifizierungsprozess das Überwachen der biometrischen Authentifizierung und/oder der Identifizierung der physikalisch nicht klonbaren Eigenschaft im Laufe der Zeit einschließt, indem Daten über eine gesetzte Anzahl der jüngsten Authentifizierungen, wie mindestens 10, mindestens 20 oder mindestens 50 jüngste Authentifizierungen, aufgezeichnet werden.

12. Chipkarte (102) nach Anspruch 11, wobei der Prozessor (114) eingerichtet ist, die aufgezeichneten Daten für vergangene Authentifizierungen zu verwenden, um Variationen im Laufe der Zeit zu identifizieren und/oder die Akzeptanzkriterien des Multifaktor-Authentifizierungsprozesses zu aktualisieren.

13. Chipkarte (102) nach Anspruch 11 oder 12, wobei der Prozessor (114) eingerichtet ist, um aufgezeichnete Daten von vergangenen Authentifizierungen zu verwenden, um eine potenzielle betrügerische Verwendung der Chipkarte zu erkennen, indem er auf Daten von dem biometrischen Sensor (130) und/oder der physikalisch nicht klonbaren Eigenschaft prüft, die mit aufgezeichneten Daten von einer früheren Authentifizierung identisch sind, und den Authentifizierungsversuch zurückweist, wenn einer oder beide der Daten von dem biometrischen Sensor (130) und/oder die Daten von der physikalisch nicht klonbaren Eigenschaft mit Daten von einer früheren Authentifizierung identisch sind.

14. Verfahren zum Steuern einer Chipkarte (102), wobei die Chipkarte umfasst: einen Prozessor (114) zum Steuern des Betriebs der Chipkarte; und einen biometrischen Sensor (130) zum Identifizieren eines berechtigten Benutzers; wobei das Verfahren umfasst:
Steuern des Betriebs der Chipkarte (102), um den Zugriff auf ein oder mehrere Sicherheitsmerkmal(e) der Chipkarte basierend auf einem Multifaktor-Authentifizierungsprozess zu erlauben; und
wobei der Multifaktor-Authentifizierungsprozess beides erfordert:
(i) Bestätigung der Identität der Chipkarte (102) basierend auf einer physikalisch nicht klonbaren Eigenschaft der Chipkarte (102), und
(ii) Authentifizierung der Identität des Benutzers über den biometrischen Sensor (130); wobei der Multifaktor-Authentifizierungsprozess eine Gewichtung einschließt, die auf die physikalisch nicht klonbare(n) Eigenschaft(en) und die biometrische Authentifizierung aufgebracht wird.

15. Computerprogrammprodukt, das Anweisungen umfasst, die, wenn sie auf einem Prozessor in einer Chipkarte (102) nach einem der Ansprüche 1 bis 13 ausgeführt werden, den Prozessor (114) veranlassen, jeden der Verfahrensschritte nach Anspruch 14 durchzuführen.

## Revendications

1. Carte à puce (102) comprenant :
un processeur (114) pour commander le fonctionnement de la carte à puce ; et
un capteur biométrique (130) pour l'identification d'un utilisateur autorisé ;
dans lequel le processeur (114) est agencé pour permettre l'accès à une ou plusieurs caractéristiques sécurisées de la carte à puce (102) sur la base d'un processus d'authentification multifactoriel nécessitant à la fois :
(i) une confirmation de l'identité de la carte à puce (102) sur la base d'une caractéristique physiquement non clonable de la carte à puce (102), et
(ii) une authentification de l'identité de l'utilisateur via le capteur biométrique (130) ;
dans lequel le processus d'authentification multifactoriel inclut une pondération appliquée aux une ou plusieurs caractéristiques physiquement non clonables et à l'authentification biométrique.

2. Carte à puce (102) selon la revendication 1, dans laquelle la caractéristique physiquement non clonable est enregistrée par la carte à puce durant un processus d'inscription.

3. Carte à puce (102) selon la revendication 1 ou 2, comprenant une mémoire pour stocker des données représentant la caractéristique physiquement non clonable, dans laquelle le processeur (114) est agencé pour comparer les données stockées pour la caractéristique physiquement non clonable avec des données nouvellement obtenues visant à représenter la même caractéristique physiquement non clonable de manière à vérifier que la carte à puce (102) est la même carte à puce qui a fourni les données enregistrées initialement pour la caractéristique physiquement non clonable.

4. Carte à puce (102) selon la revendication 1, 2 ou 3, dans laquelle la caractéristique physiquement non clonable de la carte à puce est une caractéristique qui peut être mesurée sur la base d'une entité physique de la carte à puce, et dans laquelle la caractéristique physiquement non clonable prend la forme d'une réaction physique de la carte à puce à un stimulus externe ou un stimulus interne.

5. Carte à puce (102) selon une quelconque revendication précédente, dans laquelle la caractéristique physiquement non clonable est une caractéristique physiquement non clonable d'un composant électrique (130 ; 114 ; 128) de la carte à puce, telle qu'une fonction qui peut être définie comme une réaction du composant électrique à un signal d'entrée.

6. Carte à puce (102) selon la revendication 5, dans laquelle la caractéristique physiquement non clonable d'un composant électrique inclut au moins une parmi une caractéristique physiquement non clonable d'un dispositif à semi-conducteur et une caractéristique physiquement non clonable du capteur biométrique (130).

7. Carte à puce (102) selon l'une quelconque des revendications 1 à 4, dans laquelle la caractéristique physiquement non clonable est basée sur un modèle de vibration de la carte à puce mesuré via un accéléromètre (16) sur la carte à puce.

8. Carte à puce (102) selon une quelconque revendication précédente, dans laquelle le processus d'authentification multifactoriel inclut une exigence pour une identification de la carte à puce (102) sur la base d'une combinaison de multiples caractéristiques physiquement non clonables différentes.

9. Carte à puce (102) selon une quelconque revendication précédente, dans laquelle le processus d'authentification multifactoriel inclut un seuil de précision pour la confirmation de l'identité de la carte à puce et/ou pour l'authentification de l'identité de l'utilisateur.

10. Carte à puce (102) selon une quelconque revendication précédente, dans laquelle le processeur (114) est agencé pour adapter le processus d'authentification multifactoriel dans le temps de manière à tenir compte de variations dans le temps en relation avec les données biométriques du capteur (130) et/ou en relation avec la caractéristique physiquement non clonable de la carte à puce.

11. Carte à puce (102) selon une quelconque revendication précédente, dans laquelle le processus d'authentification multifactoriel inclut la surveillance de l'authentification biométrique et/ou l'identification de la caractéristique physiquement non clonable dans le temps en enregistrant des données sur un nombre défini des authentifications les plus récentes, telles qu'au moins 10, au moins 20 ou au moins 50 authentifications récentes.

12. Carte à puce (102) selon la revendication 11, dans laquelle le processeur (114) est agencé pour utiliser les données enregistrées pour des authentifications passées pour identifier des variations dans le temps et/ou mettre à jour les critères d'acceptation du processus d'authentification multifactoriel.

13. Carte à puce (102) selon la revendication 11 ou 12, dans laquelle le processeur (114) est agencé pour utiliser des données enregistrées à partir d'authentifications passées pour détecter une utilisation frauduleuse potentielle de la carte à puce en recherchant des données provenant du capteur biométrique (130) et/ou de la caractéristique physiquement non clonable qui sont identiques à des données enregistrées provenant d'une authentification antérieure et en rejetant la tentative d'authentification si une ou les deux parmi les données provenant du capteur biométrique (130) et/ou les données provenant de la caractéristique physiquement non clonable sont identiques à des données provenant d'une authentification antérieure.

14. Procédé de commande d'une carte à puce (102), la carte à puce comprenant : un processeur (114) pour commander le fonctionnement de la carte à puce ; et un capteur biométrique (130) pour l'identification d'un utilisateur autorisé ; dans lequel le procédé comprend :
la commande du fonctionnement de la carte à puce (102) pour permettre l'accès à une ou plusieurs caractéristiques sécurisées de la carte à puce sur la base d'un processus d'authentification multifactoriel ; et
dans lequel le processus d'authentification multifactoriel nécessite à la fois :
(i) la confirmation de l'identité de la carte à puce (102) sur la base d'une caractéristique physiquement non clonable de la carte à puce (102), et
(ii) l'authentification de l'identité de l'utilisateur via le capteur biométrique (130) ;
dans lequel le processus d'authentification multifactoriel inclut une pondération appliquée aux une ou plusieurs caractéristiques physiquement non clonables et à l'authentification biométrique.

15. Produit de programme informatique comprenant des instructions qui, quand elles sont exécutées sur un processeur dans une carte à puce (102) selon l'une quelconque des revendications 1 à 13, amèneront le processeur (114) à effectuer chacune des étapes de procédé selon la revendication 14.
